Europäisches Patentamt

European Patent Office

Office européen des brevets

(19)

(11) Numéro de publication: **0 287 490**
**A1**

# (12) DEMANDE DE BREVET EUROPEEN

(21) Numéro de dépôt: 88440031.8

(22) Date de dépôt: 13.04.88

(51) Int. Cl.⁴: **B 23 Q 27/00**

(30) Priorité: 15.04.87 FR 8705354

(43) Date de publication de la demande:
19.10.88 Bulletin 88/42

(84) Etats contractants désignés:
AT BE CH DE ES FR GB GR IT LI LU NL SE

(71) Demandeur: **F.L.D. MACHINES OUTILS SA**
**10 rue de Soultz**
**F-68200 Mulhouse** (FR)

(72) Inventeur: **Gensbittel, François**
**449 rue d'Altkirch**
**F-68200 Brunstatt** (FR)

**Schmitt, Hubert**
**19 rue de Sausheim**
**F-68110 Illzach** (FR)

(74) Mandataire: NITHARDT, Roland
**CABINET ROLAND NITHARDT 12, rue du 17 Novembre**
**B.P. 1445**
**F-68071 Mulhouse Cedex** (FR)

(54) **Dispositif d'entrainement d'au moins un outil tournant pour un tour.**

(57) La présente invention concerne un dispositif d'entraînement d'au moins un outil tournant pour un tour.

Ay moyen de deux embrayages (43, 155), un arbre (52) d'entraînement d'outils tournants peut être entraîné à volonté soit par les moyens principaux (19) d'entraînement de la broche (12) du tour, soit, indépendamment de ces moyens moteurs principaux (19), par des moyens moteurs auxiliaires (152); ainsi, à partir d'un même arbre (52) d'entraînement d'outils tournants, on peut entraîner aussi bien des outils devant travailler sur une pièce (13) en rotation, en respectant un rapport déterminé dans les vitesses de rotation respectives de la pièce (13) et de l'outil (103), que des outils devant tourner sur eux-mêmes à une vitesse indépendante de la vitesse de rotation ou de l'absence de rotation de la pièce (13).

Les moyens auxiliaires d'entraînement (152) peuvent également être utilisés pour pratiquer un indexage de la broche (12) et de la pièce (13) à usiner, à l'arrêt des moyens principaux d'entraînement (19).

FIG.2

EP 0 287 490 A1

## Description

### Dispositif d'entraînement d'au moins un outil tournant pour un tour.

La présente invention concerne un dispositif d'entraînement d'au moins un outil tournant pour un tour.

On sait que de tels outils peuvent se répartir en deux catégories, à savoir une première catégorie d'outils devant tourner à une vitesse liée par un rapport déterminé à la vitesse de rotation de la broche portant la pièce à usiner, et une deuxième catégorie d'outils dont la vitesse de rotation doit pouvoir être choisie librement ; dans la première catégorie, on peut citer par exemple les outils à fraiser les plats latéraux sur la pièce à usiner, lesquels doivent tourner à une vitesse double de la vitesse de la broche, et les outils à fraiser les filets, devant tourner à la même vitesse que la broche ; dans la deuxième catégorie, on peut citer par exemple les outils de perçage ou de taraudage opérant transversalement par rapport à la broche, destinés à être utilisés alors que cette dernière est à l'arrêt, et les outils à percer ou tarauder la pièce en bout, destinés à être utilisés avec ou sans rotation de la broche, à une vitesse de rotation choisie de telle sorte que, combinée à l'absence de rotation ou à la rotation de la broche à une vitesse déterminée, elle corresponde à une vitesse relative de l'outil par rapport à la pièce fonction de la nature de celle-ci, de la nature de l'outil, et de l'usinage à effectuer.

Il est connu d'utiliser pour l'entraînement des outils de la première catégorie une liaison cinématique avec une prise de force constituée par un arbre tournant d'entraînement qui est en permanence lié cinématiquement, à la rotation, avec la broche dans un rapport de transmission fixe généralement de 1/1 ; un même moteur, prévu pour l'entraînement de la broche et de la pièce usinée à la rotation, assure alors à la fois l'entraînement de la broche et celui de l'outil tournant, le cas échéant par l'intermédiaire de moyens démultiplicateurs appropriés ; par contre, les outils tournants de la deuxième catégorie sont intégrés à des sous-ensembles que l'on rapporte à la demande sur le tour et qui sont munis de leurs propres moyens d'entraînement de l'outil à la rotation, comportant notamment un moteur propre et une transmission propre entre ce moteur et l'outil ; de tels sous-ensembles autonomes sont lourds, encombrants et coûteux.

Le but de la présente invention est de remédier à cet inconvénient en proposant un dispositif d'entraînement d'outils tournants pour tour propre à permettre l'entraînement, à partir d'une même prise de force en pratique constituée par un arbre d'entraînement, aussi bien d'outils de la première catégorie, devant tourner à des vitesses liées à la vitesse de rotation de la broche dans un rapport déterminé, que d'outils de la deuxième catégorie, devant tourner à des vitesses choisies librement.

A cet effet, la présente invention propose un dispositif d'entraînement d'au moins un outil tournant pour un tour comportant une broche longitudinale tournante en liaison cinématique, à la rotation, avec des moyens principaux d'entraînement de la broche à la rotation, des moyens de commande de la rotation et de la vitesse de rotation de la broche sous l'action des moyens principaux d'entraînement, un arbre tournant d'entraînement d'outil tournant et une chaîne de liaison cinématique, à la rotation, entre ledit arbre d'entraînement et la broche, caractérisé en ce que ladite chaîne de liaison cinématique comporte un premier embrayage formé de deux parties susceptibles d'être accouplées ou désaccouplées, à volonté, dont l'une est en liaison cinématique, à la rotation, avec la broche et dont l'autre est en liaison cinématique, à la rotation, avec l'arbre d'entraînement, et en ce que sont prévus un deuxième embrayage formé de deux parties susceptibles d'être accouplées ou désaccouplées, à volonté, dont l'une est en liaison cinématique, à la rotation, avec l'arbre d'entraînement et dont l'autre est en liaison cinématique, à la rotation, avec des moyens auxiliaires d'entraînement de ladite autre partie du deuxième embrayage à la rotation, distincts des moyens principaux d'entraînement, des moyens de commande de la rotation et de la vitesse de rotation de ladite autre partie du deuxième embrayage sous l'action des moyens auxiliaires d'entraînement, indépendants des moyens de commande de la rotation et de la vitesse de rotation de la broche sous l'action des moyens principaux d'entraînement, et des moyens de commande indépendante des deux embrayages dans le sens de l'accouplement ou du désaccouplement.

Un Homme du métier comprendra aisément qu'en accouplant les deux parties du premier embrayage et en desaccouplant les deux parties du deuxième embrayage, on peut entraîner à une vitesse requise, liée dans un rapport déterminé à la vitesse de rotation de la broche, un outil de la première catégorie accouplé à l'arbre d'entraînement, en utilisant à cet effet les moyens principaux d'entraînement alors que les moyens auxiliaires d'entraînement restent inutilisés ; cet Homme du métier comprendra en outre aisément qu'en désaccouplant les deux parties du premier embrayage et en accouplant les deux parties du deuxième embrayage, on peut assurer une indépendance d'entraînement de la broche, arrêtée ou entraînée à la vitesse de rotation requise par les moyens principaux d'entraînement, et d'un outil accouplé à l'arbre d'entraînement, sous l'action des moyens auxiliaires d'entraînement réglés à la vitesse de rotation requise.

Ainsi, les outils tournants, à quelque catégorie qu'ils appartiennent, peuvent être entraînés à partir du même arbre tournant d'entraînement et il n'est pas nécessaire de présenter les outils de la deuxième catégorie sur des sous-ensembles autonomes adaptables sur le tour ; seule devient alors nécessaire l'adaptation sur le tour, en fonction de l'outil, de moyens de liaison cinématique entre l'arbre d'entraînement et cet outil, avantageusement constitués de façon particulièrement simple de moyens de transmission par engrenage et/ou par courroie ; il en résulte un coût d'ensemble considérablement réduit du tour et des dispositifs nécessaires à l'entraînement de plusieurs outils tournants appartenant aux deux catégories ci-dessus ; en outre, les moyens de liaison cinématique entre l'arbre d'entraînement et chaque outil peuvent être confinés dans un porte-outils de faible encombrement, ce qui permet de prévoir sur un même tour un nombre plus important de porte-outils, montés par exemple sur une tourelle indexable, pour présenter successivement chacun des outils, en séquence rapide, à la pièce à usiner.

En outre, le dispositif selon l'invention présente un avantage en ce que, en accouplant les deux parties respectives des premier et deuxième embrayages après avoir arrêté les moyens principaux d'entraînement, il est possible de pratiquer l'indexage de la broche en utilisant à cet effet les moyens auxiliaires d'entraînement ; cette opération est facilitée lorsque, selon un mode de réalisation préféré, le dispositif d'entraînement selon l'invention comporte un codeur d'indexage de broche en liaison cinématique, à la rotation, avec la broche ; il devient ainsi possible d'utiliser un moteur asynchrome, ne se prêtant pas à un asservissement en position et par conséquent à une utilisation à des fins d'indexage, à titre de moyens principaux d'entraînement alors que les moyens auxiliaires d'entraînement peuvent avantageusement être constitués par un moteur à courant continu, muni de moyens de commande de sa rotation et de sa vitesse de rotation.

D'autres caractéristiques et avantages ressortiront de la description ci-dessous, relative à un exemple non limitatif de mise en oeuvre de l'invention, ainsi que des dessins annexés qui font partie intégrante de cette description.

Cette description et ces dessins concernent un tour à poupée mobile mais un Homme du métier comprendra aisément qu'un dispositif selon l'invention peut également équiper un tour à poupée fixe, et que l'adaptation, à ce type de tour, des dispositions qui vont être décrites ne sort pas du cadre de ses aptitudes normales.

- La figure 1 montre, en une vue schématique de dessus, l'implantation générale de différents constituants d'un tour à poupée mobile.

- La figure 2 montre, également en une vue schématique et de dessus, partiellement en coupe par des plans horizontaux, l'intégration du dispositif selon l'invention au tour illustré à la figure 1, et illustre plus particulièrement l'entraînement d'un appareil à fraiser les plats au moyen d'un tel dispositif.

- Les figures 3, 4 5 montrent, en des vues partielles analogues à celles de la figure 2, l'utilisation d'un dispositif selon l'invention pour entraîner respectivement un perceur en bout, un perceur transversal et un appareil à fraiser les filets.

- La figure 6 montre, en une vue en perspective, une tourelle porte-outils du tour illustré aux figures 1 à 5 ainsi que trois porte-outils susceptibles d'être reçus indifféremment, éventuellement ensemble, par cette tourelle ainsi que les outils correspondants.

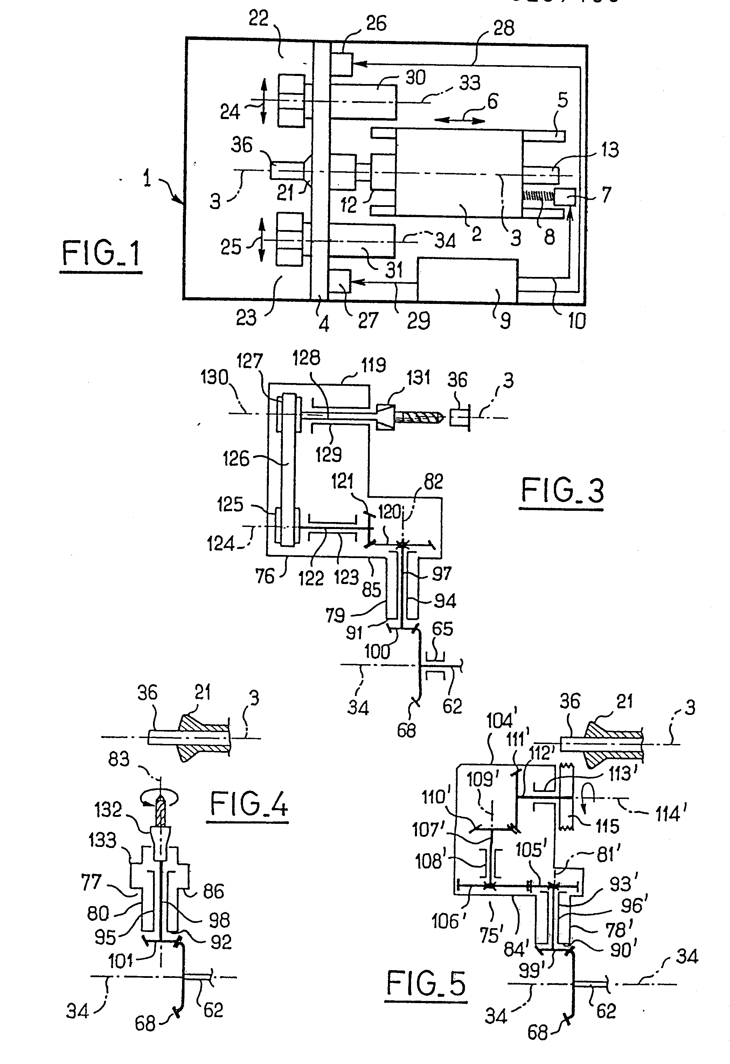

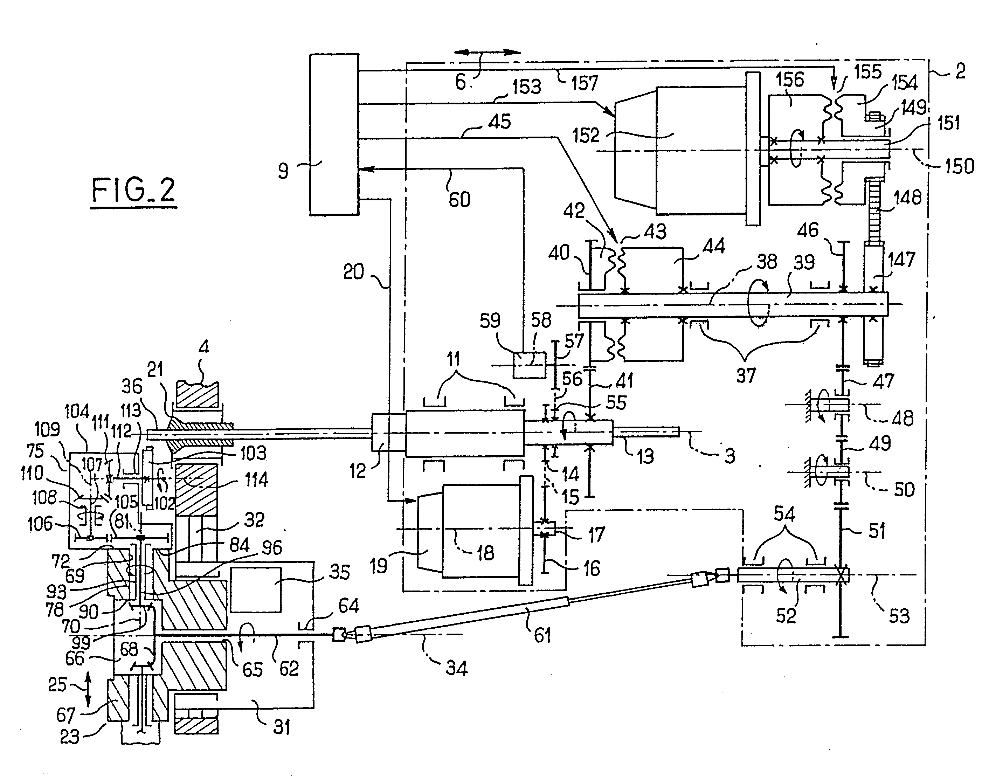

On se référera en premier lieu à la figure 1, où l'on a désigné par 1 un bâti portant une poupée 2 mobile à la translation par rapport au bâti 1 suivant une direction longitudinale symbolisée par un axe longitudinal 3, et un éventail 4 quant à lui fixe par rapport au bâti 1 et décalé longitudinalement par rapport à la poupée mobile 2.

Le bâti 1 porte la poupée mobile 2 par l'intermédiaire d'une glissière longitudinale 5 assurant ainsi un guidage de la poupée mobile 2 à la translation longitudinale par rapport à l'éventail 4, en rapprochement ou en éloignement comme on l'a schématisé en 6 ; une telle translation peut être commandée à volonté par un moteur 7 fixé sur le bâti 1 et agissant sur la poupée mobile 2 par l'intermédiaire d'une vis à billes 8 ou d'un dispositif équivalent, la mise en marche du moteur 7 en vue d'une translation longitudinale de la poupée mobile 2 dans un sens ou dans l'autre et l'arrêt du moteur 7 étant télécommandés, comme on l'a schématisé par une connexion 10, par des moyens connus en eux-mêmes, intégrés à un poste centralisé de commande 9 porté par le bâti 1 ou juxtaposé à celui-ci.

Comme le montre également la figure 2, la poupée mobile 2 présente intérieurement des paliers 11 de guidage, exclusivement à la rotation autour de l'axe 3 par rapport à la poupée mobile 2, d'une broche 12 susceptible de recevoir coaxialement, de façon solidaire mais amovible, une pièce à usiner se présentant sous la forme d'une barre longitudinale 13, d'axe 3 ; la broche 12 porte de façon solidaire une poulie 14 raccordée, par une courroie 15, à une poulie 16 solidaire d'un arbre de sortie 17, d'axe 18 parallèle à l'axe 3, d'un moteur principal 19 d'entraînement de broche, lequel moteur 19 est porté de façon solidaire par la poupée mobile 2 et peut être mis en marche, à une vitesse commandée de rotation de son arbre de sortie 17, ou arrêté à partir de moyens de commande appropriés intégrés au poste de commande 9 auquel le moteur 19 est relié par une connexion schématisée en 20.

Ainsi, la pièce 13 solidarisée avec la broche 12 peut être entraînée à la rotation à une vitesse choisie autour de l'axe 3 par rapport à la poupée mobile 2 ou immobilisée à la rotation par rapport à cette poupée mobile 2, et être déplacée longitudinalement avec cette poupée mobile 2 par rapport à l'éventail 4 que cette pièce 13 traverse de part en part, par l'intermédiaire d'un canon de guidage 21 monté libre à la rotation autour de l'axe 3 par rapport à l'éventail 4, sans autre possibilité de déplacement par rapport à celui-ci, pour servir d'appui transversal à la pièce 13 sans toutefois s'opposer ni à la rotation de celle-ci autour de l'axe 3 notamment par rapport à l'éventail 4, ni à la translation longitudinale conjointe de cette pièce 13 et de la poupée mobile 2 par rapport à l'éventail 4.

Outre le canon de guidage tournant 21, l'éventail 4 porte deux tourelles porte-outils 22, 23 dont chacune peut être déplacée transversalement, c'est-à-dire perpendiculairement à l'axe 3, dans le sens d'un rapprochement ou d'un éloignement par rapport à celui-ci comme on l'a schématisé respectivement en 24 et 25, sous l'action de moteurs respectifs 26, 27 télécommandés en marche et arrêt depuis des moyens de commande appropriés intégrés au poste de commande 9 auquel ces moteurs 26 et 27 sont reliés par des connexions respectives 28, 29 ; à cet effet, comme on l'a schématisé à la figure 2, à propos de la tourelle 23, chacune de ces tourelles 22, 23 n'est pas portée directement par l'éventail 4, mais par un chariot respectif 30, 31 qui est lui-même monté à la translation par rapport à l'éventail 4, perpendiculairement à l'axe 3, par l'intermédiaire de glissières respectives telles que 32 solidaires de l'éventail 4 et qui peut être déplacé à volonté le long des glissières respectives, par rapport à l'éventail 4, sous l'action du moteur télécommandé respectif 26, 27 ; chacune des tourelles 22, 23 est montée sur le chariot respectivement correspondant 30, 31 avec possibilité de rotation relative autour d'un axe respectif 33, 34 parallèle à l'axe 3 et possibilité d'immobilisation à l'encontre de tout mouvement par rapport à ce chariot respectif 30, 31, dans une orientation angulaire déterminée par rapport à l'axe respectif 33, 34, sous l'action de moyens d'indexage de tourelle tels que 35 intégrés à ce chariot.

De façon non représentée, la tourelle 22 est conçue pour recevoir, à l'opposé de la poupée mobile 2 par rapport à l'éventail 4, de façon solidaire mais amovible, par exemple par l'intermédiaire de montures en queues d'aronde complétées par des mâchoires de serrage, plusieurs porte-outils pour outils fixes décalés mutuellement, angulairement, en référence à l'axe 3 et que l'on peut présenter un à un, par rotation de la tourelle 22 autour de l'axe 33 par rapport au chariot 30, dans une position d'usinage d'un tronçon extrême 36 de la pièce 13, formant une saillie hors du canon de guidage 21 à l'opposé de la poupée mobile 2 par rapport à l'éventail 4.

La tourelle 23, par contre, est destinée à recevoir soit de tels outils fixes, soit des outils tournants et, s'il n'est pas nécessaire de détailler davantage les composants du tour qui viennent d'être décrits, lesquels sont connus d'un Homme du métier dans leur structure et dans leur relation mutuelle et ne forment pas partie intégrante de la présente invention, la tourelle 23 et le dispositif prévu conformément à la présente invention pour entraîner les outils qu'elle porte vont être à présent décrits en détails, en référence aux figures 2 à 6.

On se réfèrera en premier lieu à la figure 2 où l'on voit que, conformément à la présente invention, outre les paliers 11 de guidage de la broche 12 à la rotation autour de l'axe 3 et le moteur principal 19 d'entraîd'entraînement de la broche, la poupée mobile 2 porte des paliers 37 de guidage à la rotation libre par rapport à elle, autour d'un axe 38 parallèle à l'axe 3, pour un arbre 39 portant lui-même, à la rotation libre par rapport à lui autour de l'axe 38, un pignon 40 engrénant en permanence avec un pignon 41 quant à lui solidaire de la broche 12 vis-à-vis d'une rotation autour de l'axe 3 par rapport à la poupée mobile 2 ; le pignon 40 porte de façon solidaire, vis-à-vis d'une rotation autour de l'axe 38, une première partie 42 d'un embrayage 43 présentant par ailleurs une deuxième partie 44 en permanence solidaire de l'arbre 39 vis-à-vis d'une rotation autour de l'axe 38 par rapport à la poupée mobile 2 ; les deux parties 42 et 44 de l'embrayage 43 peuvent être mutuellement accouplées ou désaccouplées de façon télécommandée, à partir de moyens de commande appropriés intégrés au poste 9 auquel l'embrayage 43 est relié par une connexion schématisée en 45 ; par ailleurs, l'arbre 39 porte de façon solidaire, vis-à-vis d'une rotation autour d'un axe 38 par rapport à la poupée mobile 2, un autre pignon 46 et une poulie crantée 147 raccordée en permanence, par une courroie crantée 148, à une poulie crantée 149 montée à la rotation libre, autour d'un axe 150 parallèle à l'axe 38, sur un arbre de sortie151 d'un moteur à vitesse variable 152, tel qu'un moteur à courant continu, porté de façon solidaire par la poupée mobile 2 et susceptible d'être mis en route à une vitesse commandée ou arrêté grâce à des moyens de commande appropriés intégrés au poste de commande 9 auquel le moteur 152 est relié par une connexion 153 ; la poulie 149 est solidaire, à la rotation autour de l'axe 150 par rapport à l'arbre 151, d'une première partie 154 d'un autre embrayage 155 présentant par ailleurs une autre partie 156 quant à elle solidaire de l'arbre 151 à la rotation autour de l'axe 150 ; des moyens de commande intégrés au poste de commande 9, auquel l'embrayage 155 est relié par une connexion 157, permettent d'accoupler ou de désaccoupler mutuellement, à volonté, les deux parties 154 et 156 et l'embrayage 155 ; on remarquera que la marche et l'arrêt du moteur 152, ou moteur auxiliaire, de même que la vitesse de rotation de son arbre de sortie 151 peuvent être commandés à volonté, indépendamment de la commande de la marche et de l'arrêt du moteur principal 19, et de la vitesse de rotation de son arbre 17 lorsqu'il est en marche.

Le pignon 46 solidaire de l'arbre 39 est en permanence en prise avec un pignon 47 tourillonnant librement, par rapport à la poupée mobile 2, autour d'un axe 48 parallèle à l'axe 38 et ce pignon 47 est lui-même en prise permanente avec un pignon 49 tourillonnant également librement autour d'un axe 50 parallèle à l'axe 48, par rapport à la poupée mobile 2 ; ce pignon 49 est lui-même en prise permanente avec le pignon 51 porté de façon solidaire par un arbre 52 présentant un axe 53 parallèle à l'axe 50 ; l'arbre 52 est monté à la rotation libre autour de cet axe 53 dans des paliers 54 solidaires de la poupée mobile 2 dont il est solidaire vis-à-vis d'une translation longitudinale par rapport au bâti 1 du tour.

L'arbre 52 constitue une prise de force destinée à l'entraînement des outils tournants portés par la tourelle 23 ; selon un mode de réalisation préféré, les pignons 40, 41, 46, 51 présentent les mêmes nombres de dents et diamètres nominaux, de même que les pignons 47 et 49 présentent les mêmes nombres de dents et diamètres nominaux si bien que l'accouplement des deux parties 42 et 44 de l'embrayage 43 établit une chaîne de liaison cinématique avec rapport de transmission de $\frac{1}{1}$ entre la broche 12 et l'arbre 52 et que si les deux parties 42 et 44 de l'embrayage 43 sont accouplées alors que les deux parties 154 et 156 de l'embrayage 155 sont désaccouplées, l'arbre 52 tourne dans le même sens et à la même vitesse angulaire que la broche 12 pour établir une rotation synchronisée des outils tournants vis-à-vis de la broche 12, sous l'action du seul moteur principal 19, comme on le décrira plus loin; en désaccouplant mutuellement les deux parties 42 et 44 de l'embrayage 43 et en accouplant mutuellement les deux parties 42 et 44 de l'embrayage 43 et en accouplant mutuellement les deux parties 154 et 156 de l'embrayage 155, on peut par contre entraîner l'arbre 52 et, par conséquent, les outils tournants au moyen du moteur auxiliaire 152, à toute vitesse choisie indépendamment de la rotation ou de la non rotation de la broche 12, celle-ci pouvant être soit entraînée en rotation au moyen du moteur principal 19, soit freinée en rotation au moyen d'un frein non représenté, agissant sur le moteur 19, sur la broche elle-même ou sur un élément lié en rotation à elle, par exemple l'un des pignons 40 et 41. Dans un autre mode de fonctionnement, en accouplant mutuellement les deux parties respectives 42, 44 et 154, 156 des deux embrayages 43 et 155 et en arrêtant le moteur principal 19, on peut utiliser le moteur auxiliaire 152 pour pratiquer un indexage de la broche 12, c'est-à-dire pour la placer, ainsi que la pièce 13, dans une orientation angulaire déterminée notamment pour pratiquer un usinage sur le tronçon extrême 36 de la pièce 13 sans rotation de cette dernière; pour faciliter une telle opération, la broche 12 porte de façon solidaire, vis-à-vis d'une rotation autour de l'axe 3, une poulie crantée 55 en liaison cinématique permanente, par une courroie crantée 56, avec une poulie crantée identique 57 elle-même solidaire, à la rotation autour d'un axe 58 parallèle à l'axe 3 et fixe par rapport à la poupée mobile 2 d'un arbre d'un codeur d'indexage 59 dont les informations sont transmises par une connexion 60 à des moyens d'affichage intégrés au poste de commande 9 et/ou à une boucle de position du moteur 152 ; le codeur 59 pourrait être remplacé par tout autre moyen de repérage de la position angulaire de la broche 12.

Compte tenu de la possibilité de déplacement longitudinal relatif de la poupée mobile 2 et de l'éventail 4, ainsi que de la possibilité de déplacement transversal de la tourelle 23 et du chariot 31 par rapport à l'axe 3, l'arbre 52 d'entraînement d'outils tournants est relié par un arbre à cardan 61 à un arbre récepteur de mouvement 62 guidé à la rotation autour de l'axe 34, par rapport au chariot 31 et à la tourelle 23, par des paliers respectifs 64, 65 de ces derniers ; hormis son mouvement de rotation autour de l'axe 34, l'arbre 62 ne peut accomplir aucun autre mouvement par rapport au chariot 31, grâce à des dispositions aisément concevables par une Homme du métier.

A l'intérieur de la tourelle 23, et plus précisément dans une cavité 66 que celle-ci présente dans une zone 67 située à l'opposé de la poupé mobile 2 par rapport à l'éventail 4, à côté du tronçon extrême 36 de la pièce à usiner 13, l'arbre 62 porte de façon solidaire, à la rotation autour de l'axe 34, un pignon 68 de renvoi d'angle à 90°.

Autour du pignon 68 débouchent dans la cavité 66 six alésages identiques 69, cylindriques de révolution autour d'axes respectifs 70 perpendiculaires à l'axe 34 et situés dans un même plan perpendiculaire à cet axe 34 ; les axes 70 sont régulièrement répartis angulairement autour de l'axe 34 ; on remarquera que plus ou moins de six alésages 69 pourraient être ainsi prévus sans que l'on sorte pour autant du cadre de la présente invention.

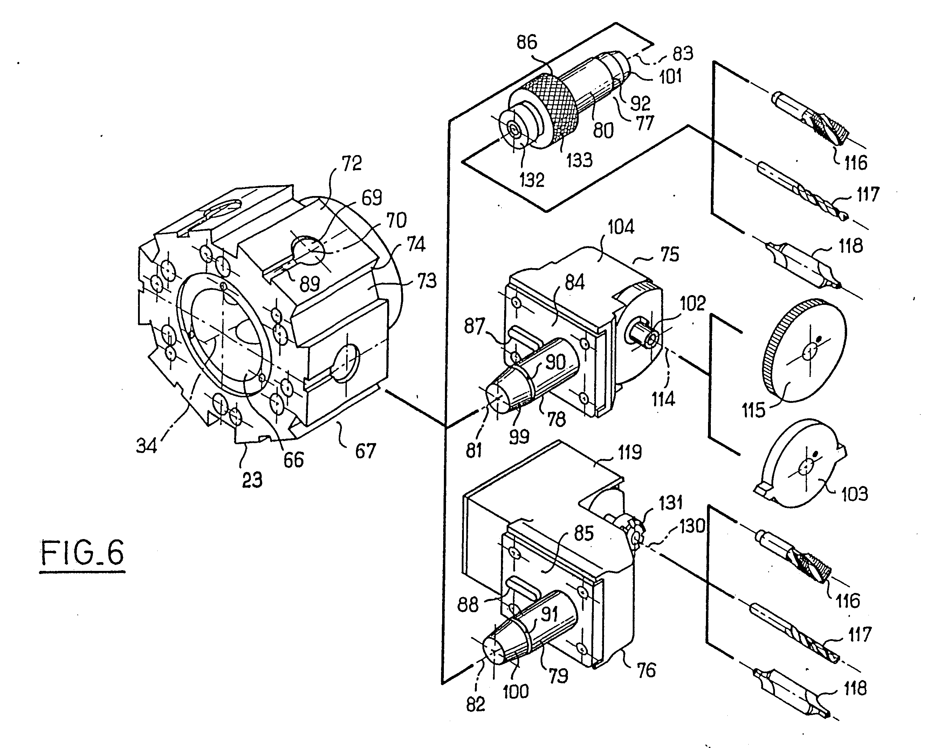

Dans le sens d'un éloignement radial par rapport à l'axe 34, chacun des alésages 69 débouche par ailleurs dans une facette plane respective 72 de la tourelle 23 ; cette facette 72 est perpendiculaire à l'axe 70 de l'alésage 69 considéré et, comme le montre la figure 6, la tourelle 23 présente ainsi autant de facettes 72, identiqueset identiquement éloignées par rapport à l'axe 34, qu'il y a d'alésages 69 et les facettes 72 voisines se raccordent mutuellement par des gorges 73 parallèles à l'axe 34 et délimitées par des flancs plans 74 également parallèles à cet axe 34, une facette 72 et les flancs 74 délimitant vers elle les deux gorges 73 immédiatement adjacentes définissant une monture en queue d'aronde susceptibles de recevoir éventuellement un porte-outil pour outil fixe de type connu (non représenté).

Cependant, la tourelle 23 est plus particulièrement destinée à recevoir de façon solidaire mais amovible des porte-outils pour des outils tournants.

Trois exemples de réalisation de tels porte-outils sont illustrés aux figures 2 à 4 et 6 respectivement sous les références 75, 76, 77, alors que la figure 5 illustre une variante 75' de réalisation du porte-outil 75 illustré aux figures 2 et 6.

En vue de sa solidarisation amovible avec la tourelle 23, chacun de ces porte-outils 75, 75', 76, 77 présente une queue respective 78, 78', 79, 80 délimitée extérieurement par une face cylindrique de révolution autour d'un axe respectif 81, 81', 82, 83 avec un diamètre sensiblement identique à celui de chaque alésage 69 de telle sorte que chaque queue 78, 78', 79, 80 puisse être engagée coaxialement dans l'un quelconque des alésages 69 et immobilisée dans ce dernier, par rapport à la tourelle 23, par une noix de serrage de type connu, non représentée, dans une position dans laquelle le porte-outil 75, 75', 76, 77 s'appuie à plat sur la facette 72 correspondante, par une face de semelle respective 84, 84', 85, 86, perpendiculaire à l'axe 81, 81', 82, 83 de la queue 78, 78', 79, 80 ; afin d'assurer une orientation déterminée des porte-outils 75, 75', 76 autour de l'axe 70 de l'alésage 69 dans lequel est engagée leur queue respective, les faces de semelle 84, 84', 85 de ces porte-outils 75 et 76 sont munies d'un pion respectif de positionnement tel que 87 (porte-outil 75) ou 88 (porte-outil 76) formant une saillie sur la face de semelle respectivement correspondante pour s'engager à la façon d'une clavette dans une gorge 89 prévue dans chaque facette 72, suivant un plan moyen incluant l'axe 34 de la tourelle 23 et l'axe 70 de l'alésage 69 correspondant à cette facette 72.

Les longueurs des saillies formées par les queues 78, 78', 79, 80 suivant les axes 81, 81', 82, 83, par rapport aux faces de semelle respectives 84, 84', 85, 86 sont identiques si bien que lorsque plusieurs porte-outils 75, 75', 76, 77 sont montés et immobilisés sur la tourelle 23 de telle sorte que leur face de semelle repose à plat sur une facette 72 respective, les différentes queues présentent à l'intérieur de la cavité 66 de la tourelle 23, vers l'axe 34 et perpendiculairement aux axes 70 des alésages 69 respectivement correspondants, des extrémités respectives équidistantes de l'axe 34 et écartées de ce dernier d'une distance au moins égale au rayon maximal du pignon de renvoi de l'angle 68 ; ces extrémités ont été désignées par les références respectives 90, 90', 91, 92 et sont définies par des faces annulaires, planes, de révolution respectivement autour des axes 81, 81', 82, 83.

Intérieurement, chacune des queues 78, 78', 79, 80 contient des paliers 93, 93', 94, 95 de guidage à la rotation autour de l'axe respectif 81, 81', 82, 83, sans autre possibilité de déplacement relatif, pour un arbre respectif de renvoi de mouvement 96, 96', 97, 98 ; cet arbre porte de façon solidaire un pignon de renvoi d'angle à 90°, 99, 99', 100, 101, identique pour tous les portes-outils 75, 75', 76, 77 et disposé dans le prolongement de la queue respective 78, 78', 79, 80, au-delà de l'extrémité respective 90, 90', 91, 92 de celle-ci, de telle sorte que chaque pignon de renvoi d'angle à 90° 99, 99', 100, 101 engrène en permanence avec le pignon de renvoi d'angle à 90° 68 de l'arbre récepteur 62 lorsque le porte-outil 75, 75', 76, 77 est monté sur la tourelle 23 dans la position définie plus haut, dans laquelle il repose à plat contre une facette 72 respective par sa face de semelle 84, 84', 85, 86 ; il en résulte que les arbres de renvoi respectifs 96, 96', 97, 98 de différents porte-outils 75, 75', 76, 77 portés simultanément dans une telle position par la tourelle 23 sont entraînés à la rotation de façon solidaire, à une même vitesse angulaire, par l'arbre récepteur 62 supposé lui-même entraîné à la rotation à partir de l'arbre 52 d'entraînement d'outils tournants.

Outre les caractéristiques communes qui viennent d'être décrites, les porte-outils 75, 75', 76, 77 présentent des caractéristiques distinctives, liées aux types d'outils qu'ils sont destinés à porter, et aux types d'usinages qu'ils sont destinés à pratiquer.

Pour des raisons de simplicité, chaque porte-outil sera décrit plus particulièrement en référence à la position qu'il occupe lorsque l'outil qu'il porte est en service, grâce à un positionnement angulaire approprié de la tourelle 23 autour de l'axe 34 sous l'action des moyens 35, ce positionnement étant tel que l'axe 70 de l'alésage 69 retenant la queue du porte-outil considéré soit non seulement perpendiculaire à l'axe 34 mais également à l'axe 3 de la broche 12 et de la pièce 13 à usiner, de même naturellement que l'axe de la queue du porte-outil considéré, et que et alésage 69 débouche hors de la cavité 66 vers l'axe 3.

On détaillera d'abord, en se référant aux figures 2 et 6, les caractéristiques spécifiques du porte-outil 75 destiné à porter et entraîner en rotation, par une broche 102, une fraise 103 à fraiser les plats.

Ce porte-outil 75 présente un carter 104 qui est solidaire de la queue 98 et que la face 84 délimite vers cette dernière ; à l'intérieur de ce carter 104, l'arbre de renvoi 96 porte de façon solidaire un pignon 105 engrenant en permanence avec un pignon 106 lui-même solidaire d'un arbre 107 tourillonnant, dans des paliers 108 du carter 104, autour d'un axe 109 parallèle à l'axe 81 et, comme ce dernier, situé dans un plan incluant les axes 34 et 3 lorsque le porte-outil 104 est en position d'utilisation ; l'arbre 107 porte par ailleurs de façon solidaire un pignon de renvoi d'angle à 90° 110, lequel engrène en permanence avec un autre pignon de renvoi d'angle à 90° 111 solidaire d'un arbre 112 monté tourillonnant dans des paliers 113 du carter 104, autour d'un axe 114 parallèle et coplanaire aux axes 34 et 3 dans cette position du porte-outil 75 ; cet arbre 112 forme une saillie hors du carter 104 vers l'éventail 4 et, au niveau de cette saillie, porte de façon solidaire, coaxialement, la broche 102 dont la conception est connue en elle-même en vue de montage coaxial, solidaire mais amovible, de la fraise 103 à fraiser les plats.

Lorsque cette dernière doit être utilisée, on accouple mutuellement les deux parties 42 et 44 de l'embrayage 43 en désaccouplant mutuellement les deux parties 154 et 156 de l'embrayage 155 de telle sorte que la broche 102 et la fraise 103 soient entraînées à la rotation autour de l'axe 114 par le moteur principal 19 assurant également l'entraînement de la broche 12 à la rotation autour de son axe 3 ; compte tenu de la liaison cinématique existant entre l'ensemble solidaire formé par la fraise 103 et la broche l102, d'une part, et la broche 12, d'autre part, la fraise 103 tourne dans le même sens que la pièce 13 et, compte tenu de ce que le rapport de transmission établi entre l'arbre d'entraînement 52 et la broche 12 et de $\frac{1}{1}$, le rapport de transmission entre l'arbre récepteur 62 et la broche 102 est choisi tel que cette dernière, avec la fraise 103, tourne deux fois plus vite que la pièce 13.

Si l'on se réfère à présent à la figure 5, on voit que le porte-outil 75' présente une structure en tout point analogue à celle du porte-outil 75 si bien que l'on y retrouve, sous les références 104' à 114' et dans les mêmes inter-relations, les éléments précédemment décrits respectivement sous les références 104 à 114 ; le porte-outil 75' peut d'ailleurs être constitué par le porte-outil 75 dont les pignons 105 et 106, montés de façon amovible sur les arbres respectifs, sont intervertis pour former respectivement le pignon 106' et le pignon 105' de façon à établir un rapport de transmission inférieur vers la broche 102, recevant alors une fraise 115 à fraiser les filets.

On sait que cette fraise 115 doit être entraînée à la rotation autour de son axe dans le même sens et à la même vitesse que la pièce 13 à usiner ; à cet effet, on accouple mutuellement les deux parties 42 et 44 de l'embrayage 43 en maintenant désaccouplées les deux parties 154 et 156 de l'embrayage 155 de telle sorte que le moteur principal 19 entraîne à la rotation non seulement la pièce 13 mais également la fraise 115 ; les caractéristiques à donner aux pignons 105 et 106 pour que, après interversion, ils constituent les pignons 106' et 105' en fournissant le rapport de transmission désiré aussi bien pour l'entraînement d'une fraise à fraiser les plats qu'une fraise à fraiser les filets sont aisément déterminables par un Homme du métier.

Le porte-outil 76 est quant à lui destiné, comme le montre la figure 6, à porter et entraîner soit un taraud 116, soit un foret 117, soit une fraise 118 destiné à travailler la pièce 13 en bout, en tournant autour d'un axe longitudinal généralement confondu avec l'axe 3.

A cet effet, à l'intérieur d'un carter 119 que la face de semelle 85 délimite vers la queue 79, le porte-outil 76 porte un pignon de renvoi d'angle à 90° 120 solidaire de l'arbre 97 comme le montre la figure 3 ; ce pignon 120 est en prise permanente avec un pignon de renvoi d'angle à 90° 121 lui-même solidaire d'un arbre 122 monté tourillonnant, dans des paliers 123 du carter 119, autour d'un axe 124 situé comme l'axe 82 dans le plan commun des axes 34 et 3 lorsque le porte-outil est en position de travail sur la pièce 13 ; l'arbre 122 porte par ailleurs de façon solidaire une poulie 125 qu'une courroie 126 maintient en liaison cinématique permanente avec une poulie 127 solidaire d'un arbre 128 monté tourillonnant, dans des paliers 129 du carter 119, autour d'un axe 130, dans l'exemple illustré, est aligné avec l'axe 3 ; cette liaison par courroie entre les arbres 122 et 128 pourrait être remplacée par une liaison par engrenages, assurant également l'identité des sens de rotation des arbres 122 et 128 ; l'arbre 128 débouche hors du carter 119 vers l'éventail 4 et porte de façon solidaire, en regard de cet éventail 4, un mandrin 131 de réception coaxiale et de solidarisation amovible de l'un quelconque des outils 116, 177, 118.

L'entraînement de ces outils doit pouvoir se faire indépendamment de la rotation, de la vitesse de rotation ou de l'absence de rotation de la pièce 13 sur elle-même si bien que, pour utiliser l'un quelconque des outils 116, 117, 118, on désaccouple les deux parties 42 et 44 de l'embrayage 43 pour dissocier l'entraînement de cet outil vis-à-vis de l'entraînement de la pièce 3, et l'on accouple par contre les deux parties 154 et 156 de l'embrayage 155 pour entraîner l'outil 116, 117, 118, à une vitesse choisie librement, au moyen du moteur auxiliaire 152.

Le porte-outil 77, destiné à recevoir un à un les mêmes outils 116 à 118 que le porte-outil 76, et dans le but de travailler la pièce transversalement, c'est-à-dire perpendiculairement à son axe 3 alors que cette pièce 13 est généralement à l'arrêt, comporte à cet effet un mandrin 132 en tout point comparable au mandrin 131 si ce n'est qu'il est porté directement par l'arbre de renvoi 98, à une extrémité de ce dernier formant saillie vers l'axe 3, suivant l'axe 83 coupant perpendiculairement cet axe 3 lorsque le porte-outil 77 est en service, hors d'un carter 133 constituant un simple élargissement annulaire, dans le sens d'un éloignement radial par rapport à l'axe 83, en comparaison avec la queue 80 du porte-outil 77 comme le montrent les figures 4 et 6.

Pour assurer l'entraînement du mandrin 132 à la rotation autour de l'axe 83 notamment lorsque la pièce 13 est arrêtée, on désaccouple les deux parties 42 et 44 de l'embrayage 43 et l'on accouple les deux parties 154 et 156 de l'embrayage 155 pour entraîner le mandrin 132, à une vitesse choisie librement, au moyen du moteur auxiliaire 152.

Au préalable, on peut être amené à pratiquer un indexage de la pièce 13, pour pratiquer le taraudage au moyen de l'outil 116, ou le perçage au moyen de l'outil 117, ou le fraisage au moyen de l'outil 118 dans un emplacement de la pièce 13 parfaitement défini quant à sa position angulaire autour de l'axe 3 ; à cet effet, les deux moteurs 19 et 52 étant à l'arrêt, on accouple les deux parties respectives 42, 44 et 154, 156 des deux embrayages 43 et 155 puis, en mettant en route le moteur auxiliaire 152 à une faible vitesse de rotation, on provoque la rotation de la pièce 13 jusqu'à ce que le codeur 59, ou l'autre moyen de repérage le remplaçant, détecte l'arrivée de cette dernière à l'orientation requise ; on arrête alors le moteur auxiliaire 152, puis on désaccouple les deux parties 42 et 44 de l'embrayage 43 et, en remettant en route le moteur auxiliaire 152, on provoque la rotation du mandrin 132 à la vitesse requise pour pratiquer l'usinage par un déplacement approprié du chariot 31 le long des glissières 32 ; la précision de l'indexage de la pièce peut être considérablement améliorée si, comme il est illustré, la poulie 149 présente un diamètre nominal sensiblement inférieur, par exemple de moitié, au diamtre nominal de la poulie 147.

## Revendications

1. Dispositif d'entraînement d'au moins un outil tournant (103, 115 à 118) pour un tour comportant une broche longitudinale tournante (12) en liaison cinématique, à la rotation, avec des moyens principaux (19) d'entraînement de la broche (12) à la rotation, des moyens (9) de commande de la rotation et de la vitesse de rotation de la broche (12) sous l'action des moyens principaux d'entraînement (19), un arbre tournant (52) d'entraînement d'outil tournant (103, 115 à 118) et une chaîne de liaison cinématique, à la rotation, entre ledit arbre d'entraînement (52) et la broche (12), caractérisé en ce que ladite chaîne de liaison cinématique comporte un premier embrayage (43) formé de deux parties (42, 44) susceptibles d'être accouplées ou désaccouplées, à volonté, dont l'une (42) et en liaison cinématique, à la rotation, avec la broche (12) et dont l'autre (44) est en liaison cinématique, à la rotation, avec l'arbre d'entraînement (52), et en ce que sont prévus un deuxième embrayage (155) formé de deux parties (154, 156) susceptibles d'être accouplées ou désaccouplées, à volonté, dont l'une (154) est en liaison cinématique, à la rotation, avec l'arbre d'entraînement (52) et dont l'autre (156) est en liaison cinématique, à la rotation, avec des moyens auxiliaires (152) d'entraînement de ladite autre partie (156) du deuxième embrayage (155) à la rotation, distincts des moyens principaux d'entraînement (19), des moyens (9) de commande de la rotation et de la vitesse de rotation de ladite autre partie (156) du deuxième embrayage (155), sous l'action des moyens auxiliaires d'entraînement (152), indépendants des moyens (9) de commande de la rotation et de la vitesse de rotation de la broche (12) sous l'action des moyens principaux d'entraînement (19), et des moyens (9) de commande indépendante des deux embrayages (43,155) dans le sens de l'accouplement ou du désaccouplement.

2. Dispositif selon la revendication 1, caractérisé en ce que les moyens auxiliaires d'entraînement (152) sont constitués par un moteur (152) à vitesse variable et en ce que les moyens (9) de commande de la rotation et de la vitesse de rotation de ladite autre partie (156) du deuxième embrayage (155) sous l'action des moyens auxiliaires d'entraînement (152) sont constitués par des moyens (9) de commande de la rotation et de la vitesse de rotation dudit moteur (152).

3. Dispositif selon l'une quelconque des revendications 1 et 2, caractérisé en ce qu'il comporte un codeur (59) d'indexage de broche (12) en liaison cinématique, à la rotation, avec la broche (12).

4. Dispositif selon l'une quelconque des revendications 1 à 3, caractérisé en ce que ladite chaîne de liaison cinématique, à la rotation, établit un rapport de transmission de 1:1 entre la broche (12) et l'arbre d'entraînement (52) lorsque lesdites parties (42, 44) du premier embrayage (43) sont accouplées.

5. Dispositif selon l'une quelconque des revendications 1 à 4, le tour comportant des moyens porte-outil (23, 75, 75', 76, 77) et des moyens de déplacement longitudinal et/ou transversal relatif de la broche (12) et des moyens porte-outil (23) et l'arbre d'entraînement (52) étant immobile longitudinalement et transversalement par rapport à la broche (12), caractérisé en ce qu'il comporte un arbre tournant (62) récepteur de mouvement, immobile longitudinalement et transversalement par rapport aux moyens porte-outil (23, 75, 75', 76, 77), et des moyens de liaison cinématique, à la rotation, d'une part entre l'arbre récepteur (62) et l'arbre d'entraînement (52) et d'autre part entre l'arbre récepteur (62) et au moins un moyen (102, 131, 132) de réception d'un outil tournant (103, 115 à 118) porté par les moyens porte-outil (23, 75, 75', 76, 77).

6. Dispositif selon la revendication 5, caractérisé en ce que les moyens porte-outil (23, 75, 75', 76, 77) comportent une tourelle porte-outil (23) montée à la rotation, de façon indexable, autour de l'arbre récepteur (62), en ce que l'arbre récepteur (62) porte de façon solidaire un pignon (68) de renvoi d'angle à l'intérieur de ladite tourelle (23), en ce que la tourelle (23) porte une pluralité d'arbres de renvoi (96, 96', 97, 98) tourillonnant autour d'axes respectifs (70, 81, 81', 82, 83) qui sont mutuellement décalés angulairement autour de l'arbre récepteur (62) et présentent des orientations respectives identiques par rapport à l'arbre récepteur (62), et en ce que chaque arbre de renvoi (96, 96', 97, 98) porte de façon solidaire, à l'intérieur de la tourelle (23), un pignon (99, 99', 100, 101) de renvoi d'angle engrénant avec ledit pignon (68) de renvoi d'angle de l'arbre récepteur (62) et est lié cinématiquement, à la rotation, avec un moyen respectif (102, 131, 132) de réception d'un outil tournant (103, 115 à 118).

7. Dispositif selon la revendicaiton 6, caractérisé en ce que les arbres de renvoi (96, 96', 97, 98) et les moyens respectifs (102, 131, 132) de réception d'un outil tournant (103, 115 à 118) sont amovibles par rapport à la tourelle (23) et en ce que les moyens porte-outil comportent en outre une pluralité de porte-outils (75, 75', 76, 78) dont chacun porte, de façon tourillonnante, l'un respectif desdits arbres de renvoi (96, 96', 97, 98) et le moyen (102, 131, 132) de réception d'un outil tournant (103, 115 à 118) respectivement associé, et en ce que la tourelle (23) et les porte-outils (75, 75', 76, 77) présentent des moyens complémentaires (69, 72, 78, 78', 79, 80, 87, 88, 89) d'assemblage mutuel solidaire mais amovible, dans des positions telles que les arbres de renvoi (96, 96', 97, 98) tourillonnent autour desdits axes respectifs (70, 81, 81', 82, 83) par rapport à la tourelle (23) et que les pignons de renvoi d'angle respectifs (99, 99', 100, 101) des arbres de renvoi (96, 96', 97, 98) coopèrent avec le pignon de renvoi d'angle (68) de l'arbre récepteur (62).

8. Dispositif selon l'une quelconque des revendications 5 à 7, caractérisé en ce que l'arbre récepteur (62) est longitudinal.

9. Dispositif selon la revendication 8 en combinaison avec l'une quelconque des revendication 6 et 7, caractérisé en ce que les pignons de renvoi d'angle (68, 99, 99', 100) d'un arbre de renvoi (96, 96', 97) et de l'arbre récepteur (62) forment un renvoi d'angle à 90° et en e que l'arbre de renvoi (96, 96', 97) est lié cinématiquement, par des moyens de renvoi d'angle à 90°, à un moyen (102, 131) de réception d'un outil (103, 115 à 118) tournant autour d'un axe longitudinal (114, 114', 130).

10. Dispositif selon la revendication 8 en combinaison avec l'une quelconque des revendications 6 et 7, caractérisé en ce que les pignons de renvoi d'angle (68, 101) d'un arbre de renvoi (98) et de l'arbre récepteur (62) forment un renvoi d'angle de 90° et en ce que l'arbre de renvoi (98) porte de façon solidaire un moyen (132) de réception d'un outil (116 à 118) tournant autour d'un axe transversal (83).

0287490

FIG.1

FIG.3

FIG.4

FIG.5

FIG.2

0287490

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-B-1 300 782  (HOMMELWERKE) | 1 | B 23 Q  27/00 |
| | --- | | |
| A | DE-B-1 286 372  (HAMM) | 1 | |
| | --- | | |
| A | DE-C-1 041 318  (BORN) | 1 | |
| | --- | | |
| A | DE-C-  911 689  (BREUER) | 1 | |
| | --- | | |
| A | FR-A-1 514 248  (LOIRE) | 1 | |
| | --- | | |
| A | FR-A-  586 349  (PERDON) | 1 | |
| | --- | | |
| A | FR-A-2 468 427  (CITIZEN) | 6 | |
| | ----- | | |

**DOMAINES TECHNIQUES RECHERCHES (Int. Cl.4)**

B 23 Q
B 23 B

Le présent rapport a été établi pour toutes les revendications

| Lieu de la recherche | Date d'achèvement de la recherche | Examinateur |
|---|---|---|
| LA HAYE | 22-07-1988 | DE GUSSEM J.L. |